# EUROPÄISCHE PATENTSCHRIFT

(11) **EP 1 313 390 B1**
(45) Veröffentlichungstag und Bekanntmachung des Hinweises auf die Patenterteilung: **21.03.2007**
(21) Anmeldenummer: 01960038.6
(22) Anmeldetag: 27.08.2001
(51) Int. Cl.: A47J 27/18

(54) **VERFAHREN UND VORRICHTUNG ZUM FERTIGSTELLEN VON VORGEFERTIGTEN SPEISEN**
METHOD AND DEVICE FOR PREPARING PRE-COOKED MEALS
PROCEDE ET DISPOSITIF DE PREPARATION DE PLATS PRECUISINES

(30) Priorität: 31.08.2000 CH 170300
(43) Veröffentlichungstag der Anmeldung: 28.05.2003
(73) Patentinhaber: Pasta & Sughi S.A., 1202 Genf (CH)
(72) Erfinder: LEUTWYLER, Robert, CH-8113 Boppelsen (CH)
(74) Vertreter: Schaad, Balass, Menzl & Partner AG
(86) Internationale Anmeldenummer: PCT/CH2001/000520
(87) Internationale Veröffentlichungsnummer: WO 2002/017760

(56) Entgegenhaltungen:
- US-A- 4 656 934
- US-A- 4 803 917
- US-A- 4 873 917
- US-A- 5 228 382
- US-A- 5 365 831

## Beschreibung

Die Erfindung betrifft ein Verfahren und eine Vorrichtung zum Fertigstellen von vorgefertigten speisen nach Anspruch 1 beziehungsweise 10.

Im Fastfoodbereich besteht das Problem, Speisen schnell und bei gleichbleibend guter Qualität zu einem annehmbaren Preis bereitzustellen. In Portionen vorgefertigte, gekühlt oder gefroren gelagerte Speisen werden auf Vorrat oder entsprechend der Bestellung des Kunden erwärmt. Zum Auftauen und Erwärmen von vorgekochten Speisen werden regelmässig Mikrowellenöfen benutzt. Bei diesen werden die speisen jedoch häufig nicht gleichmässig erhitzt, sondern bleiben innen kalt und werden aussen überhitzt- Des weiteren leidet auch die Qualität der Speisen unter der ungleichmässigen Wärmebelastung. Ein Aufwärmen im Wasserbad ist zeit- und arbeitsaufwendig. Insbesondere für Pasta-Produkte ist keine befriedigende Lösung bekannt, bei der die Pasta weder austrocknet, verklebt noch zu weich wird.

Die Patentschrift US 4,873,917 offenbart eine Vorrichtung zum kontinuierlichen Dampfkochen von Reis. Ungekochter Reis wird einem Tank entnommen und in einer ersten Dampfeinheit mit heissem Dampf vorgekocht. Anschliessend befördert eine Taucheinheit den vorgekochten Reis durch ein Wasserbad auf ein Förderband, welches den Reis durch eine zweite Dampfeinheit hindurch transportiert. In der zweiten Dampfeinheit werden dem Reis zuerst flüssige und dann feste Speisekomponenten aus einem Zutatenbehälter zugeführt und sogleich durch Rühren mit dem Reis vermischt. Danach wird die Reismischung unter Rühren mit heissem Dampf erhitzt, bevor sie vom Förderband als fertig zubereitetes Reisgericht aus der Vorrichtung befördert wird.

Der Erfindung liegt daher die Aufgabe zugrunde, ein Verfahren und eine Vorrichtung zum Fertigstellen von vorgefertigten Speisen bereitzustellen, mit welchem bzw. mit welcher die genannten Nachteile des Standes der Technik vermieden werden und Speisen mit gleichbleibend hoher Qualität schnell, hygienisch und preisgünstig fertiggestellt werden können.

Die Aufgabe wird gelöst durch ein verfahren bzw. eine Vorrichtung zum Fertigstellen von vorgefertigten Speisen mit den Merkmalen von Anspruch 1 bzw. 10. Vorteilhafte Weiterbildungen des Verfahrens bzw. der Vorrichtung sind in den anhängigen Ansprüchen angegeben.

Nach dem erfindungsgemässen Verfahren werden vorgefertigte Speisen in einer ersten und einer davon getrennten zweiten Komponente bereitgestellt. Dies sorgt zum einen für grössere Auswahl- bzw. Kombinationsmöglichkeiten unter den fertigen Gerichten bei gegebener Anzahl von vorgefertigten Komponenten. Es kann daher ein erweitertes Speisenangebot zur Verfügung gestellt werden. Durch das Mischen beider Komponenten erst unmittelbar vor Verzehr wird ein Durchweichen der Speise und eine Veränderung der geschmacklichen Qualität verhindert. Das Verfahren eignet sich insbesondere zum Zubereiten von vorgekochter Pasta und vorgefertigter Sauce, aber auch von vorgekochtem Reis mit vorgefertigter Beilage und ähnlichen miteinander zu mischenden Komponenten.

Erfindungsgemäss wird zum gleichmässigen Erwärmen wenigstens die erste Komponente vor oder nach Zufügen der zweiten Komponente in einem geschlossenen Mischbehältnis heissem Wasserdampf, der dem Mischbehältnis zugeführt wird, für ein vorbestimmbares Zeitintervall ausgesetzt und dabei gerührt und/oder geschüttelt. Das Rühren wird mit einem geeigneten in das Mischgefäss hineinragenden Rührgerät, z.B. einen Rührhaken oder eine Schnecke, durchgeführt. Es hat den Vorteil einer effektiven Durchmischung der Komponenten und Vergleichmässigung der Wärme, ist allerdings für aus längeren Bestandteilen zusammengesetzte Speisen, z.B. Spaghetti, weniger geeignet. Alternativ oder zusätzlich kann das Mischgefäss geschüttelt werden, womit sich auch Spaghetti und ähnliche Produkte effektiv mit der zweiten Komponente vermischen lassen.

Das Erhitzen mit Wasserdampf hat den Vorteil, dass die Speise ohne Qualitätseinbussen sehr schnell und schonend erwärmt werden können. Das Erhitzen im Garraum des Mischbehältnisses ist sehr energiesparend, da nur wenig Wasser zur Wasserdampfgenerierung verdampft werden muss. Das Kochgut wird somit nicht ausgelaugt, Farbe, Eigengeschmack, Nährstoff- bzw. Vitamingehalt bleiben erhalten. Vorzugsweise hat der Wasserdampf dazu eine Temperatur von 100 bis 160°C, vorzugsweise 140°C, und einen Wassergehalt von 0,5 bis 3 ml Wasser pro Liter Dampf, vorzugsweise 1 ml Wasser pro Liter Dampf. Vorzugsweise wird das Kochgut während einer Garzeit von 10 bis 40 Sekunden erwärmt und gerührt und/oder geschüttelt. Bei einer Garzeit von vorzugsweise etwa 15 Sekunden werden bereits eine gute Erwärmung und Durchmischung erzielt. Gegebenenfalls können die Komponenten nach dem Erwärmen noch weiter zur weiteren Vergleichmässigung der Wärme und besseren Durchmischung verrührt bzw. geschüttelt werden.

Beide Komponenten werden vor dem Erwärmen und Mischen zusammengeführt, wenn beide gemeinsam erhitzt werden sollen, z.B. bei Pasta mit heisser Sauce. Wird die zweite Komponente nicht erhitzt, z.B. bei Pestosauce oder Carbonara, so wird sie nach dem Erhitzen und Durchmischen der ersten Komponente beigefügt und vorzugsweise nochmals ohne Erhitzen vermischt.

Ausführungsbeispiele der Erfindung sind in der Zeichnung dargestellt und nachfolgend beschrieben. Dabei zeigen rein schematisch:
- Fig. 1: eine erfindungsgemässe Vorrichtung mit einem rotierenden Transporttisch;
- Fig. 2: eine Öffnungsvorrichtung zum Öffnen von mit einer Folie versiegelten Teilbehältnissen;
- Fig. 3: den Öffnungsvorgang eines Teilbehältnisses;
- Fig. 4a,b: das Umschlagen eines ersten Teilbehältnisses auf ein zweites Teilbehältnis in einer Umschlagstation;
- Fig. 4C: eine Umschlagvorrichtung mit einem Träger für je zwei erste und zweite Teilbehältnisse;
- Fig. 5a: ein erstes Beispiel für eine Misch- und Erwärmstation;
- Fig. 5b: ein zweites Beispiel für eine Misch- und Erwärmstation;
- Fig. 6: ein drittes Beispiel für eine Misch- und Erwärmstation;
- Fig. 7a,b: das Öffnen des Trägers in einer Entladestation;
- Fig. 8: eine Prinzipskizze einer weiteren erfindungsgemässen Vorrichtung mit einem Förderband als Transportvorrichtung;
- Fig. 9: eine weitere Misch- und Erwärmstation mit Dampfhauben und einer Rührvorrichtung;
- Fig. 10: die Misch- und Erwärmstation aus Fig. 9 in Seitenansicht;
- Fig. 11a,b: ein Mischbehältnis mit einer Dampfhaube und einem bzw. zwei Mischhaken im Längsschnitt;
- Fig. 12a,b: ein Mischbehältnis mit Dampfhaube, das auf einen rotierenden Mischer aufgesetzt ist.

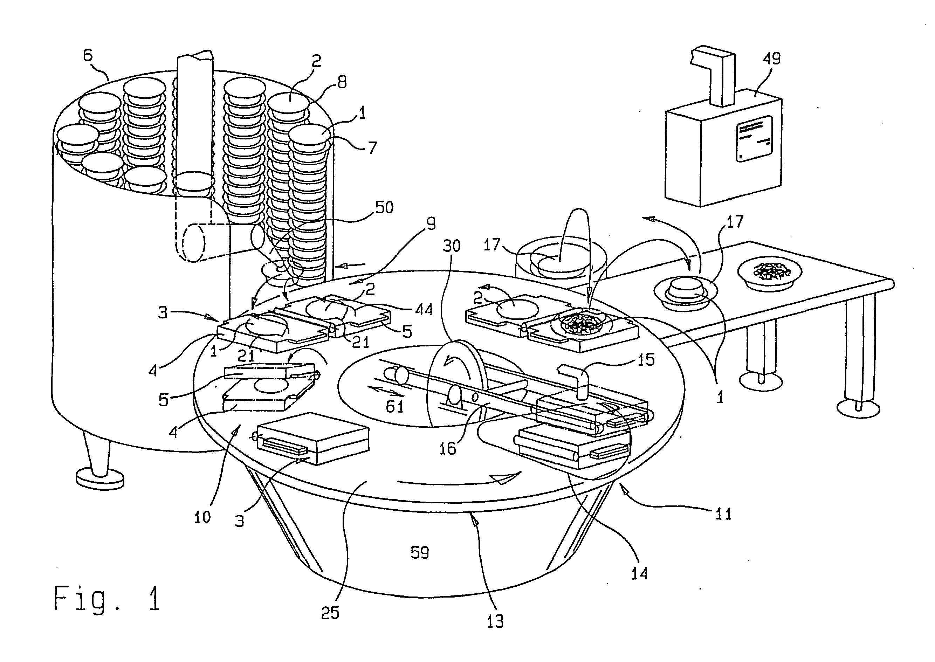

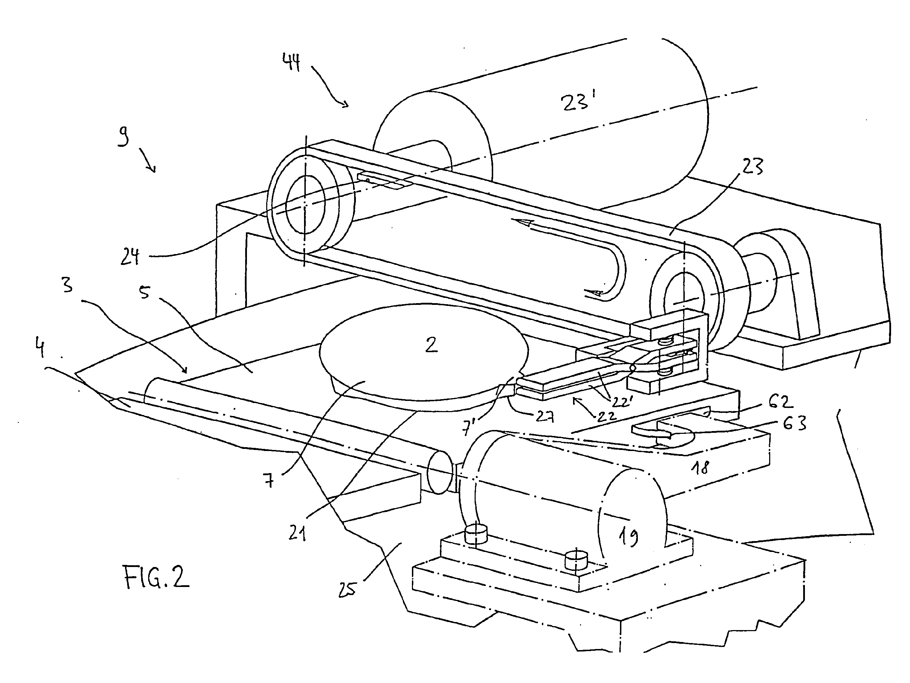

In Figur 1 ist eine erfindungsgemässe Vorrichtung zum Fertigstellen von vorgefertigten Speisen schematisch dargestellt. Erste und zweite Komponenten der Speisen befinden sich vorgefertigt, portioniert, abgepackt und gekühlt in den ersten bzw. zweiten Teilbehältnissen 1 bzw. 2. Jeweils eine Komponente ergibt zusammen mit einer zweiten Komponente ein fertiges Gericht. Die ersten bzw. zweiten Teilbehältnisse 1, 2 sind in Stapeln in einem Magazin 6 gelagert, das auch als Kühlvorrichtung fungiert. Ein über eine Kontrollvorrichtung 49 angesteuerter Roboter 50 greift entsprechend der Bestellung eines Kunden ein erstes und ein zweites Teilbehältnis 1 bzw. 2. Diese Teilbehältnisse 1, 2 werden in einer Beladestation in entsprechende Aufnahmeöffnungen 21, 21' von Trägerteilen 4, 5 eines Trägers 3 passgenau eingesetzt und gehaltert. Der Träger 3 befindet sich dabei auf einer Transportvorrichtung 13, hier in Form eines rotierenden Tisches 25, im Bereich der Beladestation 9. In der Beladestation 9 werden des weiteren die Deckfolien 7, 8 des ersten bzw. zweiten Teilbehältnisses mittels einer Öffnungsvorrichtung 44 entfernt, die in Fig. 2 genauer dargestellt ist. Alternativ ist zum Öffnen eine eigene Station vorgesehen, zu der der Träger 3 befördert wird.

Nach dem Beladen des Trägers 3 mit Teilbehältnissen 1, 2 wird der Transporttisch 25 gedreht, wodurch der Träger 3 eine Umschlagstation 10 erreicht. Hier wird der zweite Trägerteil 5, welcher das zweite Teilbehältnis 2 enthält, auf den ersten Trägerteil 4 zur Bildung eines geschlossenen Mischbehältnisses umgeschlagen. Das Umschlagen kann auch während der Drehbewegung erfolgen. Durch das Umschlagen kommen die ersten und zweiten Teilbehältnisse 1 bzw. 2 mit ihren etwa gleich grossen Öffnungen aufeinander zu liegen. Die zweite Komponente wird dadurch auf die erste Komponente gekippt, z.B. Sauce auf Pasta. Die beiden Trägerteile 4, 5 und damit die beiden Teilbehältnisse 1, 2 werden vorzugsweise gefugt aufeinander gedrückt gehalten, so dass das Mischbehältnis geschlossen ist. Der geschlossene Träger 3 wird dann durch Rotieren des Transporttisches 25 einer Misch- und Erwärmstation 11 zugeführt. Er wird dort ergriffen und mittels eines Kurbeltriebs 60 mit einer Koppelstange 16 entlang einer Umlaufbahn 14 in einer senkrecht zur Transporttischebene liegenden Ebene bewegt. Der Kurbeltrieb 60 ist in einer Aussparung 61 in der Tischmitte angeordnet. Dem Mischbehältnis wird über eine Zufuhreinrichtung 15 während des Schüttelns Wasserdampf zum Erwärmen der Speise zugeführt. Es wird anschliessend wieder auf dem Transporttisch 25 abgelegt.

Durch weitere Rotation des Transporttisches 25 wird der Träger 3 einer Entladestation 12 zugeführt. Dort werden die Trägerteile 4,5 wieder auseinander geklappt und das entleerte zweite Teilbehältnis 2 entsorgt. Auf das erste Teilbehältnis 1, welches die erwärmten und vermischten Komponenten der Speise enthält, wird ein möglichst vorgewärmter Teller 17 gestülpt. Dann werden das erste Teilbehältnis 1 und der Teller 17 gemeinsam um 180° um eine horizontale Achse gedreht und das Teilbehältnis 1 entsorgt. Das fertige Gericht kann nun direkt auf dem Teller 17 serviert werden.

Da alle geschilderten Schritte automatisch ablaufen, kann das fertig aufgewärmte Gericht erst beim Servieren mit dem Menschen in Berührung kommen, während das Zubereiten unter genau kontrollierbaren hygienischen Bedingungen stattfindet. In den Betriebspausen wird die gesamte Vorrichtung gereinigt, z.B. indem eine Reinigungshaube auf den Transporttisch mitsamt den einzelnen Stationen gestülpt wird und die gesamte Vorrichtung mit bekannten Reinigungsmitteln und Wasserstrahlen abgespritzt wird. Das Abwasser kann in einer unter dem Transporttisch 25 angeordneten Auffangwanne 59 aufgefangen werden.

Bei Erwärm- und Mischzeiten von ca. 15 Sekunden kann ein bestelltes Gericht bereits etwa 3 Minuten nach der Bestellung ausgegeben werden. Mit der in Fig. 1 dargestellten Vorrichtung lassen sich etwa 100 Gerichte pro Stunde aufwärmen. Eine weitere Leistungssteigerung lässt sich erreichen, wenn Träger verwendet werden, die jeweils zwei erste und zwei zweite Teilbehältnisse aufnehmen können, siehe Figur 4c.

Soll nur die erste, aber nicht die zweite Komponente eines Gerichts erhitzt werden, wird in der Beladestation 9 zunächst das erste Teilbehältnis 1 in die entsprechende Aussparung 21' des Trägers 3 eingesetzt. In die gegenüberliegende Aussparung 21 wird ein leeres, geöffnetes Teilbehältnis eingesetzt, das ebenfalls aus dem Magazin 6 kommt und mit dem ersten Teilbehältnis das Mischbehältnis bildet. Unter Durchlaufen der Umschlagstation 10 und der Misch- und Erwärmstation 11 wird die erste Komponente erwärmt und durch weitere Rotation des Transporttisches 25 wieder zur Beladestation 9 gefahren. Das leere, zum Mischen dienende zweite Teilbehältnis, das inzwischen entfernt wurde, wird ersetzt durch ein zweites Teilbehältnis, das die zweite Komponente enthält. Dieses wird geöffnet, und anschliessend werden die Umschlagstation 10 und die Misch- und Erwärmstation 11 erneut durchlaufen. In der Misch- und Erwärmstation 11 wird nunmehr lediglich gemischt, nicht aber oder nur vermindert erneut Wasserdampf zugeführt. So wird die zweite Komponente keiner hohen Wärmebelastung ausgesetzt. Das fertige Gericht wird wie im bereits beschriebenen Fall auf einen Teller umgeschlagen und ausgetragen.

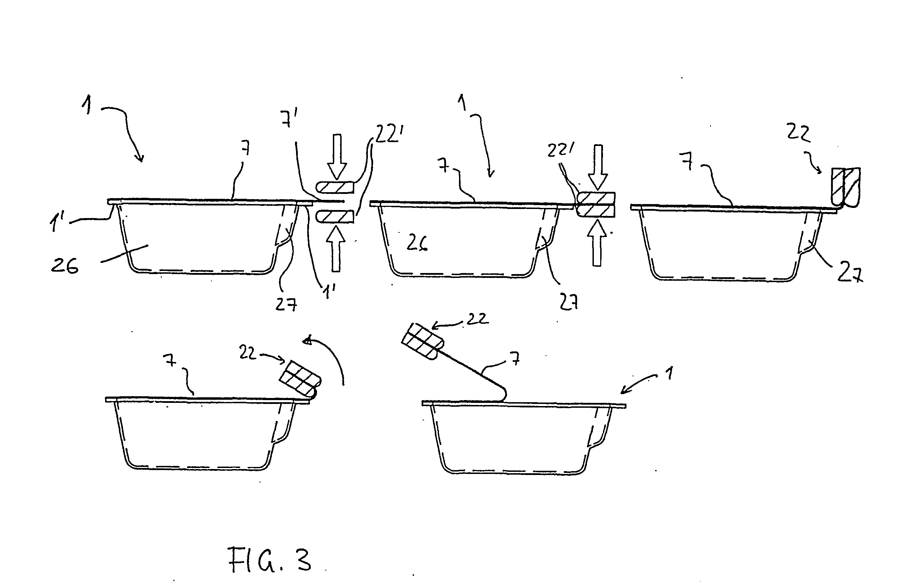

Fig. 2 zeigt eine detailliertere Ansicht der Beladestation 9. In der Aussparung 21 eines Trägerteils 5 des Trägers 3 befindet sich bereits das zweite, noch mit einer Folie 7 verschlossene Teilbehältnis 2. Zur definierten Ausrichtung relativ zum Trägerteil 5 weist jedes Teilbehältnis einen Fortsatz 27 bzw. allgemein eine solche Behältnisform auf, dass es nur einer definierten Lage passgenau in die entsprechend geformte Aussparung 21 im Trägerteil einsetzbar ist. Diese Orientierung ist hier so, dass ein überstehendes Ende 7' der Deckfolie 7 von Klemmbacken 22' einer Zange 22 ergriffen werden kann. Die Zange 22 wird als Teil der Öffnungsvorrichtung 44 über ein Antriebsband 23 und einen Motor 23' entlang einer ovalen Bewegungsbahn bewegt. Dabei wird das Ende 7' der Deckfolie 7 zuerst nach oben und dann nach hinten gezogen, was in Fig. 3 dargestellt ist. Mittels einer Kulisse 24, die entlang des Bandes 23 angeordnet ist, wird die Zange 22 geöffnet und die ergriffene Deckfolie 7 freigegeben, worauf sie in einen bereitgestellten Abfallbehälter (hier nicht dargestellt) fällt. Spiegelsymmetrisch zur Öffnungsvorrichtung 44 ist eine weitere Öffnungsvorrichtung zum Öffnen des ersten Teilbehältnisses, das sich im Trägerteil 4 befindet, vorgesehen (hier nicht dargestellt). Das zweite Trägerteil 5 ist mittels eines Motors 19, mit dem es über einen Hebel 18 verbunden ist, auf das erste Trägerteil 4 klappbar. Der Träger 3 bzw. wenigstens das zweite Trägerteil 5 weist dazu eine seitlich in Transportrichtung angeformte Zunge 62 auf, die durch Rotation des Transporttisches 25 bzw. allgemein Weiterfördern des Trägers 3 formschlüssig in einen Schlitz 63 im Hebel 18 einführbar ist.

Fig. 3 zeigt schematisch den Aufbau eines Teilbehältnisses 1 sowie den Ablauf des Öffnungsvorgangs. Das Teilbehältnis 1 besteht aus einer Schüssel mit seitlich überstehendem Rand 1'. Es weist seitlich einen Fortsatz 27 zum passgenauen Einsetzen in eine entsprechend geformt Aussparung des Trägers auf. Im Inneren 26 des Teilbehältnisses 1 befindet sich eine Komponente der zuzubereitenden Speise. Das Teilbehältnis 1 ist mit einer ebenen Folie 7 abgedeckt, die auf dem Rand 1' aufgeklebt oder aufgeschweisst ist und an einem Ende 7' seitlich übersteht. Dieses Ende 7' wird zum Öffnen von zwei Klemmbacken 22' einer Zange 22 ergriffen, nach oben und dann nach hinten gezogen, wodurch die Folie 7 abgezogen wird.

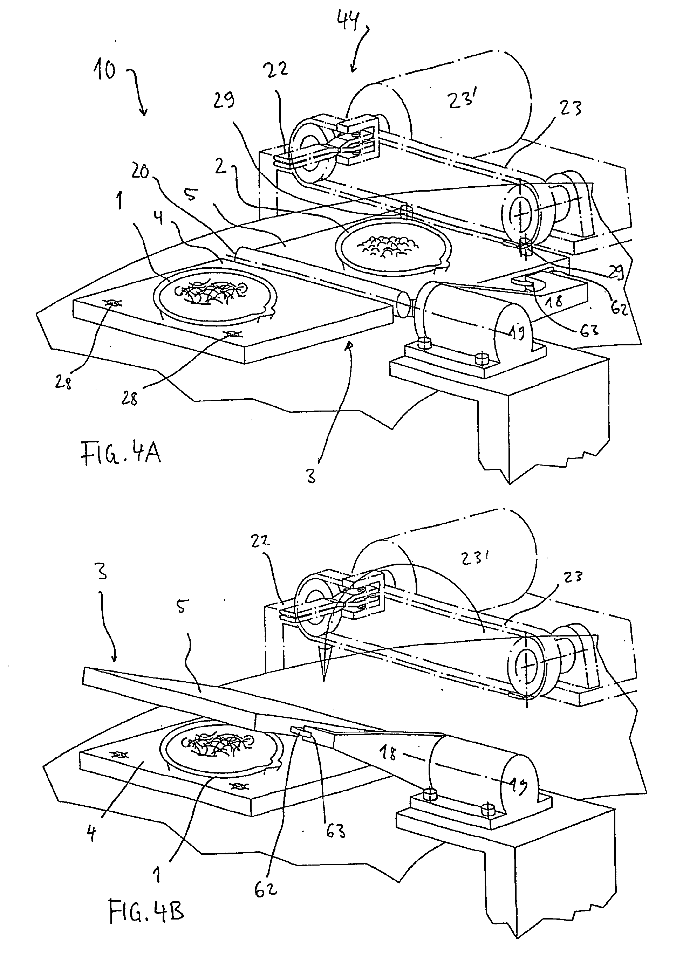

Die Fig. 4a und 4b zeigen schematisch den Umschlagvorgang in der Umschlagstation 10. Auf dem Träger 3 befinden sich das bereits geöffnete erste und zweite Teilbehältnis 1 bzw. 2 mit den entsprechenden Speisekomponenten. Die zum Öffnen verwendete Öffnungsvorrichtung 44 ist strichpunktiert dargestellt. Mit dem Motor 19 wird nun der Hebel 18 und das damit über Zunge 62 und Schlitz 63 formschlüssig verbundene zweite Trägerteil 5 aus der horizontalen Lage verschwenkt und um 180° gedreht. Dazu sind die beiden Trägerteile 4, 5 mit einem Scharnier 20 verbunden. Zum passgenauen Aufeinanderlegen der Trägerteile 4, 5 weist das erste Trägerteil 4 Zentrierlöcher 28 und das zweite Trägerteil 5 entsprechende Zapfen 29 auf. Dadurch wird sichergestellt, dass die geöffneten ersten und zweiten Teilbehältnisse 1, 2 unter Bildung eines geschlossenen Mischbehältnisses aufeinander zu liegen kommen. Damit die zweite Komponente nicht ausläuft, muss die Schwenkbewegung des Hebels 18 bzw. des Trägerteils 5 hinreichend schnell sein. Vorzugsweise wird auch das erste Trägerteil 4 etwas angehoben, um den Zusammenklappvorgang zu verkürzen.

Figur 4C zeigt eine Umschlagvorrichtung 10 mit einem Träger 3' mit einem ersten und einem zweiten Trägerteil 4' bzw. 5', das jeweils zwei Aussparungen 21", 21"' für erste bzw. zweite Teilbehältnisse 1, 2 aufweist. Wenigstens das zweite Trägerteil 5' weist auch hier eine Zunge 62' auf, die in den Schlitz 63 des Hebels 18 einführbar ist.

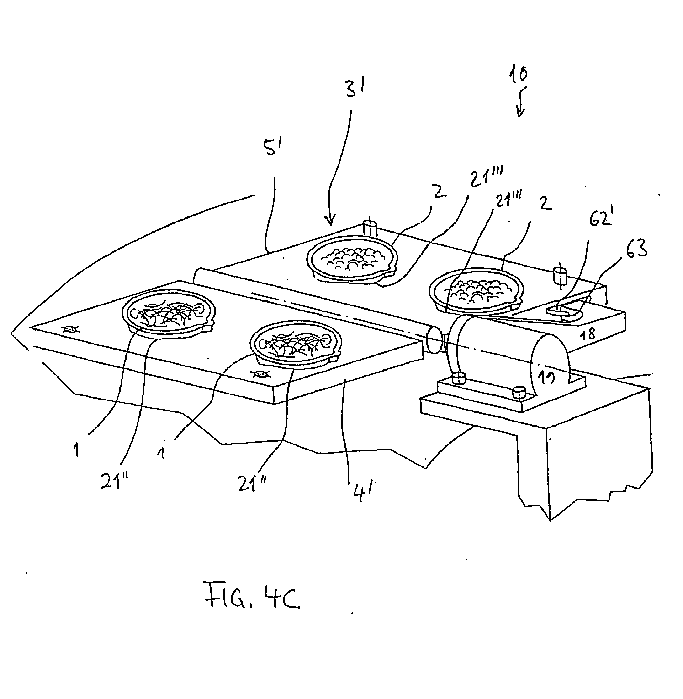

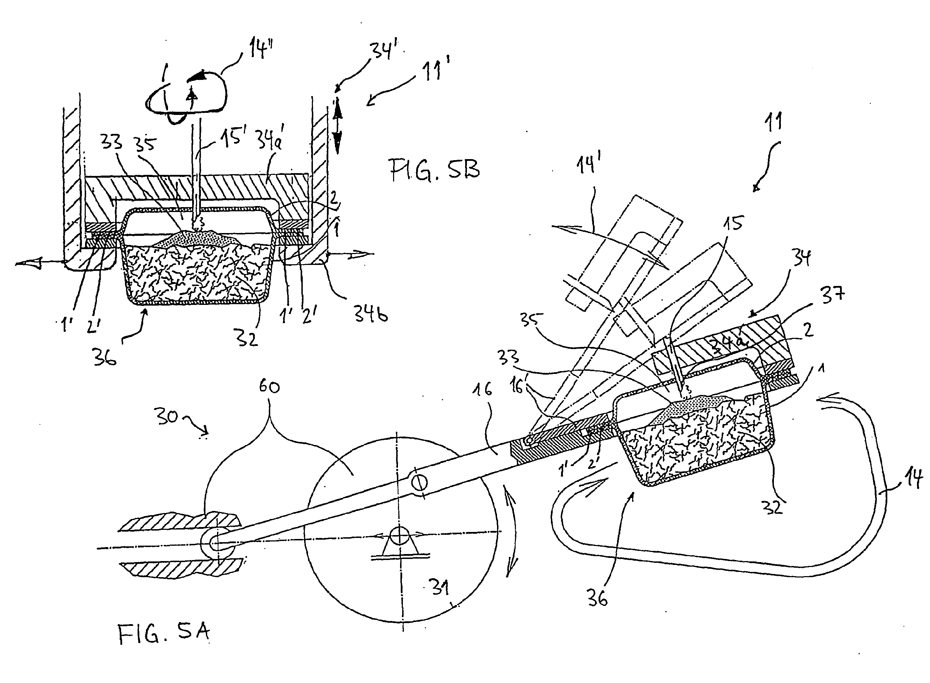

Fig. 5a zeigt ein erstes Beispiel einer Misch- und Erwärmvorrichtung 11 mit einer Schwenk- und Schüttelvorrichtung 30 in Form eines Kurbeltriebs 60 mit einer Koppelstange 16 und einem Exzenter 31. Das dem Kurbeltrieb 60 abgewandte Ende der Koppelstange 16 bewegt sich entlang einer Umlaufbahn 14 in Form eines Dreiecks mit abgerundeten Ecken. Um das Mischgefäss 36 auf diese Umlaufbahn zu zwingen, kann auch eine entsprechende Führung vorgesehen sein. An diesem Ende der Koppelstange 16 ist das Mischgefäss 36 befestigt, das durch das erste und zweite Teilgefäss 1 bzw. 2 gebildet wird. Durch die Bewegung der Koppelstange 16 wird die im Mischgefäss 36 enthaltende erste Komponente 32 mit der zweiten Komponente 33 vermischt. Die beiden Teilgefässe 1, 2 werden zwischen der Koppelstange 16 und einem daran befestigten Schwenkarm 16' eingeklemmt. Wenn sich die Teilgefässe in einem Träger befinden, werden die Trägerteile bzw. vorzugsweise daran seitlich befestigte Zungen zwischen Koppelstange 16 und Schwenkarm 16' eingeklemmt. Der Schwenkarm 16' ist zum Be- und Entladen der Misch- und Erwärmstation 11 nach oben verschwenkbar, vorzugsweise mittels eines Antriebs, was hier strichpunktiert dargestellt ist. Der Schwenkarm 16' trägt des weiteren die Zufuhreinrichtung 15 für Wasserdampf. Mit einer Kanüle 37, die die Einlassöffnung für Wasserdampf bildet, wird beim Umschwenken des Schwenkarms 16' ein Loch in den Boden des zweiten Teilgefässes 2 und damit in den Deckel des Mischgefässes 36 gestochen. Falls die Teilgefässe in einem Träger gehaltert sind, weist wenigstens das zweite Trägerteil eine Öffnung im Boden auf, durch die der Behältnisboden zugänglich ist. Die Halterung der Zufuhreinrichtung 15 am Schwenkhebel 16', die Zufuhreinrichtung und der Schwenkhebel 16 bilden eine Schliess- und Dampfeinheit 34, mit der das Mischgefäss verschlossen gehalten und mit der zum Erwärmen seinem Inneren Wasserdampf zugeführt wird.

Fig. 5b zeigt eine weitere Misch- und Erwärmstation 11', bei der das Vermischen der ersten bzw. zweiten Komponente 32, 33 durch eine Überlagerung von mit einem Linearmotor erzeugten Bewegungen in horizontaler und vertikaler Richtung erreicht wird. In das Innere 35 des Mischbehältnisses 36 wird Wasserdampf mittels einer Zufuhreinrichtung 15' gegeben. Das. Mischgefäss 36 liegt mit seinem Rand 1', 2' auf einem Halterahmen 34b auf. Durch das Halteteil 34a', das auch die Zufuhreinrichtung 15' trägt, werden das erste und das zweite Teilbehältnis 1, 2 aufeinander gepresst. Somit bleibt das Mischgefäss 36 beim Schütteln sicher verschlossen.

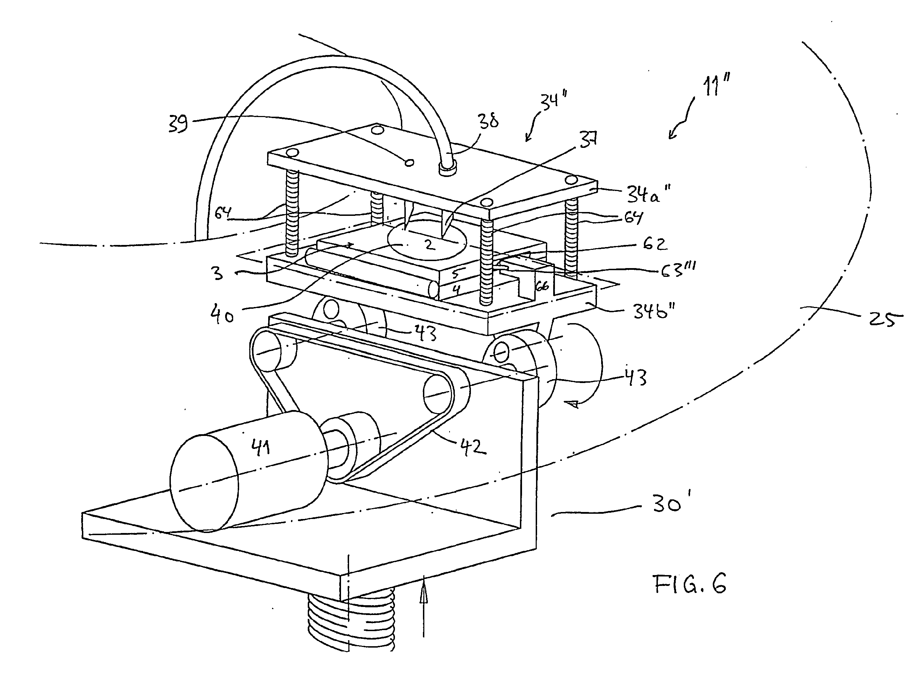

Fig. 6 zeigt eine weitere Misch- und Erwärmstation 11''. Der zusammengeklappte Träger 3 liegt auf einer Halteplatte 34b", das mittels einer Schüttelvorrichtung 30' in eine rotierende Bewegung versetzt wird. Die Schüttelvorrichtung 30' umfasst mittels eines Antriebsbandes 42 durch einen Motor 41 angetriebene Exzenterrollen 43, die mit der Halteplatte 34b" verbunden sind. Die Zunge 62 des zweiten Trägerteils 5 ist im Eingriff mit einem Schlitz 63"' an einem Arm 66, der sich von der unteren Halteplatte 34b" nach oben erstreckt, so dass der Träger am Platz gehalten wird und beim Schütteln nicht aufklappen kann. Auf einer unteren Halteplatte 34b'' stützt sich eine obere Halteplatte 34a" ab, wobei die Halteplatten 34a" und 34b" mittels Spindelantrieben 64 in vertikale Richtung zueinander beweglich sind und eine Schliess- und Dampfeinheit 34" bilden. Durch die obere Halteplatte 34a'' ist ein Schlauch 38 als Zufuhreinheit für Wasserdampf geführt. Er mündet in einer Kanüle 37, mit der das zweite Teilbehältnis 2 durch eine Öffnung 14 im Boden des Trägers 3 durchstochen werden kann, wenn die Halteplatten 34a", 34b" relativ zueinander bewegt werden. Eine weitere Kanüle 38, die ebenfalls das Teilbehältnis 2 durchsticht, dient als Entlastungsöffnung für Wasserdampf, um das Entstehen von Überdruck im Mischbehältnis zu verhindern.

Die untere Halteplatte 34b" liegt im Ruhezustand in der Ebene des Transporttisches 25, wobei der Träger durch den Transporttisch 25 in die Schliess- und Dampfeinheit 34 " geschoben wird.

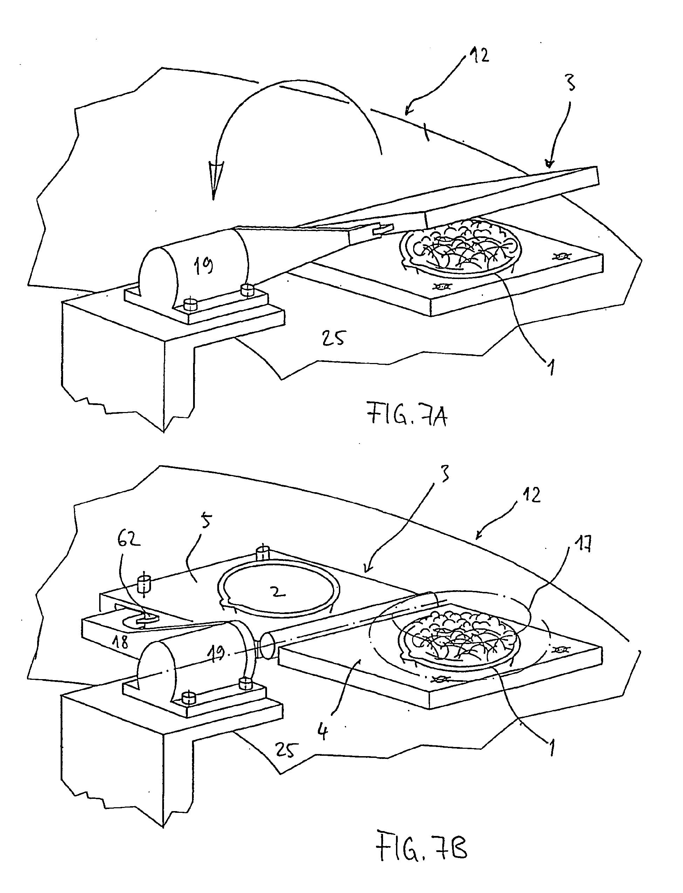

In Fig. 7a,b ist das Entladen des Trägers 3 in einer Entladestation 12 schematisch dargestellt. Der Träger 3 wird dabei mittels des Motors 19 und des Hebels 18, der sich im Eingriff mit der Zunge 62 befindet, aufgeklappt. Das vermischte und erwärmte Gericht befindet sich nun im Teilbehältnis 1 im Trägerteil 4, im anderen Trägerteil 5 ist das leere Teilbehältnis 2. Das Teilbehältnis 1 wird nun von einem Teller 17 abgedeckt und umgeschlagen, vorzugsweise mittels eines Roboters, während das Teilbehältnis 2 direkt entsorgt wird.

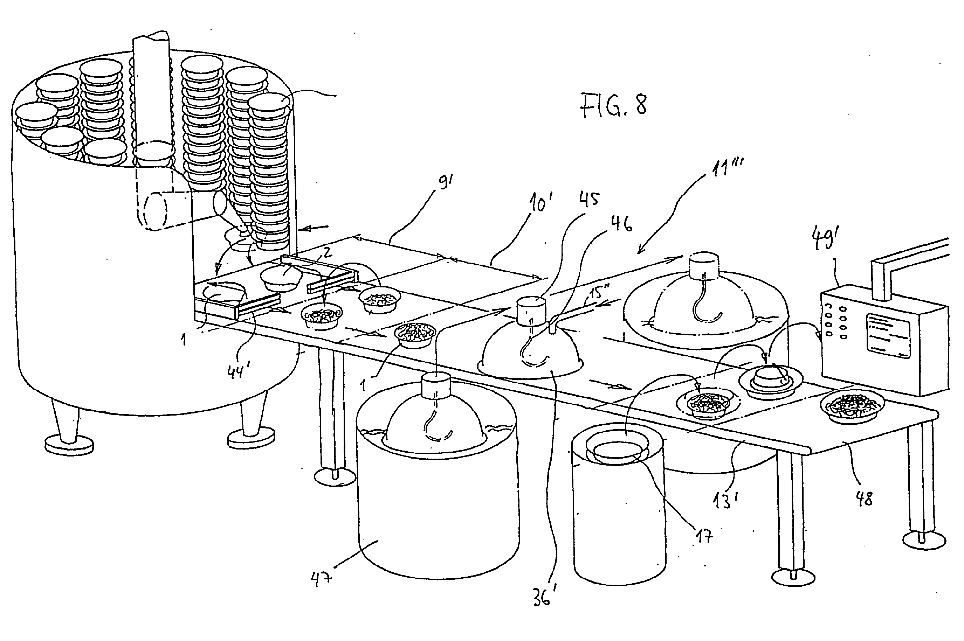

Fig. 8 zeigt ein weiteres Beispiel einer erfindungsgemässen Vorrichtung mit einem Förderband 48 als Transporteinrichtung. Wie bereits beschrieben, befinden sich Teilbehältnisse 1, 2 in einem gekühlten Magazin 6 und werden mittels eines Roboters 50 in einer Beladestation 9' in Träger eingesetzt. Die Träger sind vorliegend nicht dargestellt. Mittels Öffnungseinrichtungen 44' werden die Deckfolien entfernt. Das zweite Teilbehältnis 2 wird auf das erste Teilbehältnis 1 in einer Umschlagvorrichtung 10' umgeschlagen. Auf das Teilbehältnis 1, das nun beide Speisekomponenten enthält, wird in einer Misch- und Erwärmstation 11"' eine Dampfhaube 45 aufgesetzt. Diese enthält einen Anschluss für eine Wasserdampfzufuhr 15 " , sowie in ihrem Inneren wenigstens eine Einströmöffnung für Wasserdampf. Im Inneren der Dampfhaube 45 ist des weiteren eine Rührvorrichtung 46, hier in Form eines Mischhakens, angeordnet. Der Mischhaken wird während des Zuströmens von Wasserdampf rotiert, um das Kochgut gleichmässig zu durchmischen und zu erwärmen. Vorzugsweise ist die Haube 45 so gestaltet, dass sie mit dem Rand des Teilgefässes 1 bündig abschliesst, und so ein geschlossenes Mischbehältnis 36' bildet. Nach dem Durchmischen und Erwärmen wird die Haube 45 angehoben, seitlich verfahren und in einer Waschvorrichtung 47 gereinigt. Diese besteht beispielsweise aus einem Wasserbecken, in das die Haube 45 eingetaucht wird. Vorteilhaft ist es, wenn wie hier zwei Hauben 45 vorhanden sind, von denen stets eine in Betrieb ist, während die andere gereinigt wird. Das erwärmte und durchmischte Gericht wird mittels des Förderbandes 48 weiter transportiert, mit einem Teller 17 bedeckt, umgeschlagen und servierbereit abgestellt. Die ganze Vorrichtung wird mittels einer Kontrollvorrichtung 49' gesteuert. Auch hier kann das fertige Gericht erstmals beim Servieren mit den Menschen in Berührung kommen.

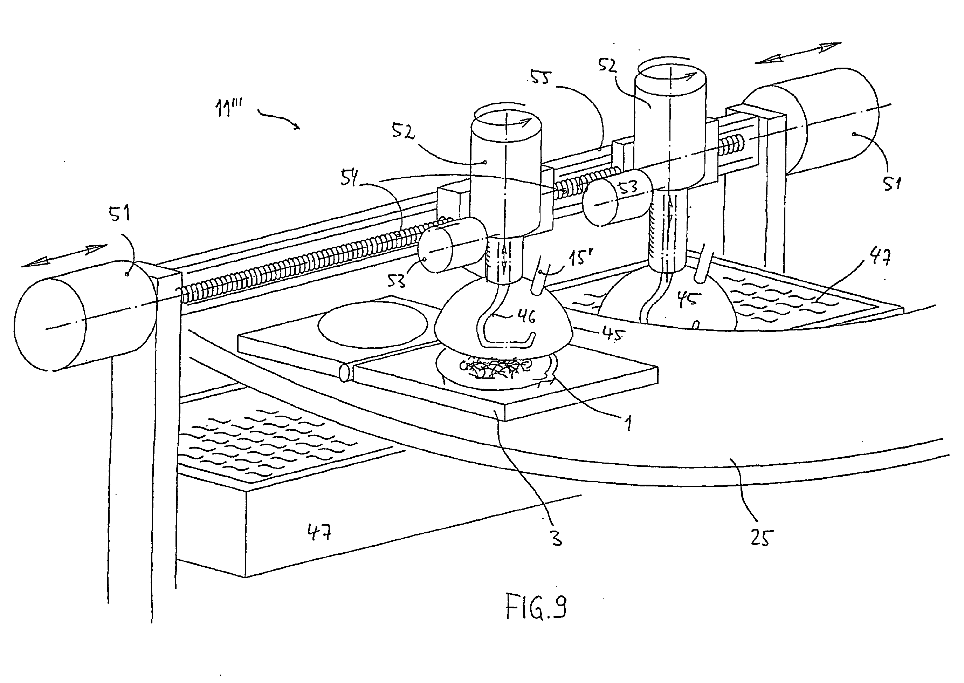

Fig. 9 zeigt eine detailliertere Darstellung der Misch- und Erwärmvorrichtung 11"' aus Fig. 8, hier mit einem rotierenden Transporttisch 25. Die beiden Speisekomponenten befinden sich im ersten Teilgefäss 1, das in den Träger 3 eingesetzt ist. Dieser wird auf dem Transporttisch liegend unter die Dampfglocke 45 gefahren. Mittels eines ersten Antriebs 53 wird die Dampfglocke 45 mitsamt darin integrierter Rührvorrichtung 46 auf den Träger 3 abgesenkt und bildet mit dem Teilbehältnis 1 ein geschlossenes Mischbehältnis. Mittels eines zweiten Antriebs 52 wird die Rührvorrichtung 46 in Rotationsbewegung versetzt, wodurch die Komponenten vermischt werden. Während des Rührens wird über die Zufuhreinrichtung 15'' heisser Wasserdampf zugeführt. Anschliessend wird mittels des ersten Motors 53 die Haube 45 wieder angehoben und mittels eines dritten Motors 51 in seitliche Richtung relativ zur Transportrichtung des Transporttisches 25 verfahren. Über der Waschvorrichtung 47 wird die Glocke mittels des ersten Antriebs 53 zum Reinigen abgesenkt. Parallel ist eine zweite Haube vorgesehen, die sich in Fig. 9 in einer Reinigungsposition befindet. Beide Hauben 45 mit den dazugehörigen ersten und zweiten Antrieben 52 bzw. 53 sind an einer Führungsschiene 55 gelagert. Die seitliche Bewegung erfolgt jeweils mittels einer Spindel 54.

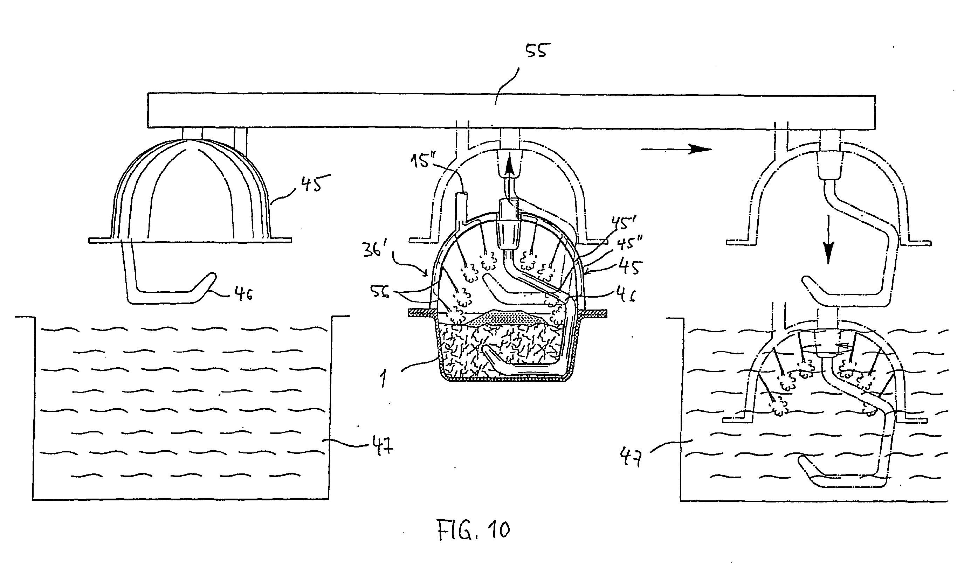

Fig. 10 zeigt die Anordnung aus Fig. 9 im Querschnitt. Die Dampfhaube 45 wird zum Erwärmen und Mischen auf das Teilbehältnis 1 aufgesetzt, so dass ein geschlossenes Mischbehältnis 36' gebildet wird. Die Haube 45 selbst ist doppelwandig und enthält eine Vielzahl von Einlassöffnungen 56 für zwischen den inneren und äusseren Wandungsteilen 45' und 45" geleiteten, durch eine Zufuhreinrichtung 15" zugeführten Wasserdampf. Mit einer Rührvorrichtung 46 in Form eines Mischhakens wird der Inhalt des Mischbehältnisses 36' durchmischt. Nach abgeschlossenem Mischen und Erwärmen wird die Haube 45 nach oben gezogen und seitlich entlang der Führung 55 verfahren und in eine Waschvorrichtung 47 abgesenkt. Zum Reinigen werden die Einströmöffnungen 56 mit Wasserdampf oder Druckluft durchblasen. Eine zweite Haube 45 kann währenddessen wieder in Position zum Durchmischen und Erwärmen einer weiteren Speiseportion gebracht werden.

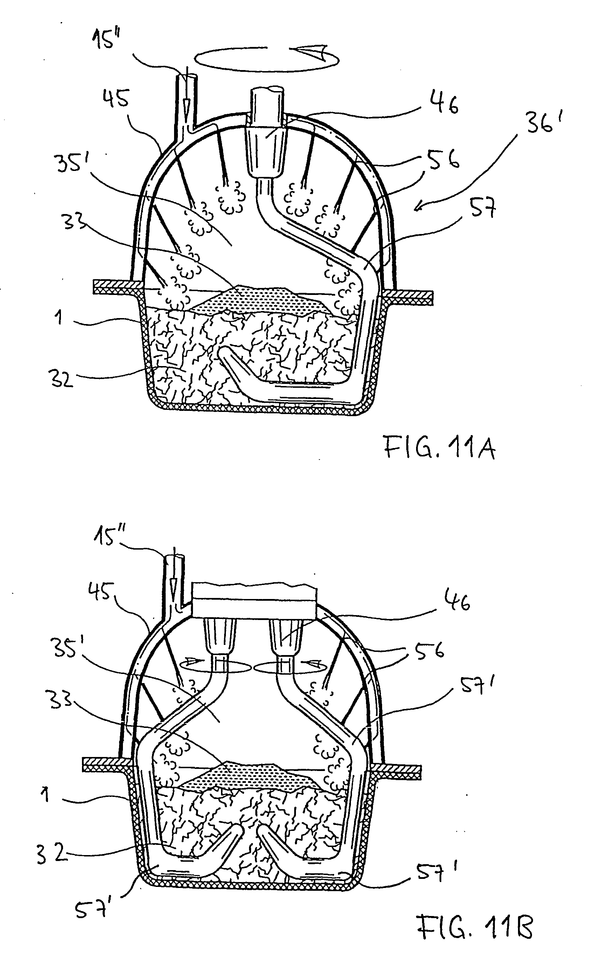

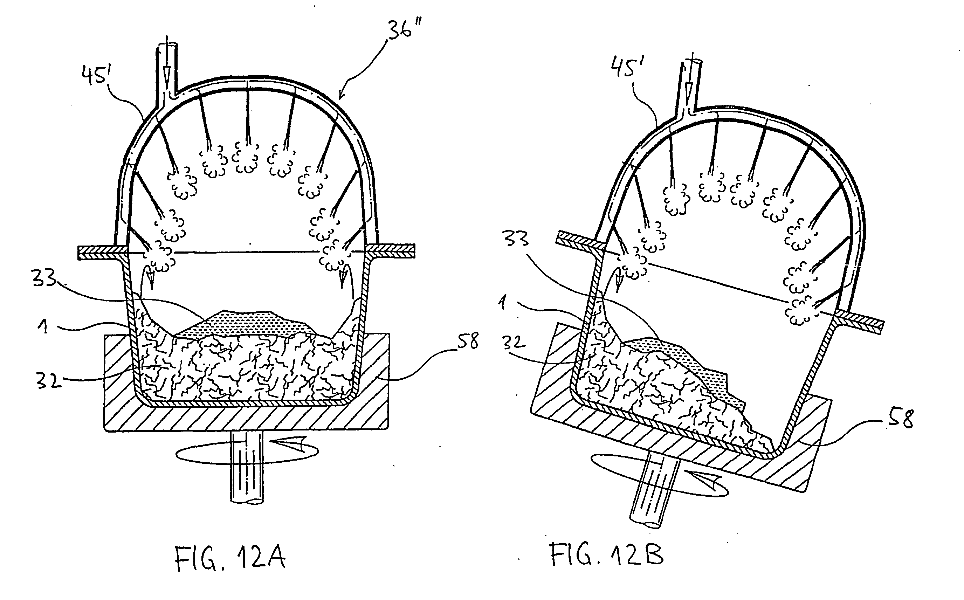

In den Fig. 11a und b sind Mischbehältnisse 36' mit einer Rührvorrichtung 46 mit einem bzw. zwei Mischhaken 57 bzw. 57' dargestellt. In die doppelwandige Haube, die bündig mit dem ersten Teilbehältnis 1 abschliesst, wird über eine Zufuhreinrichtung 15" Wasserdampf eingeleitet, der über Einströmöffnungen 56 in das Innere 35' des Mischbehältnisses 36' gelangt. Währenddessen wird der Mischhaken 57 zum Durchmischen der ersten und zweiten Komponente 32, 33 relativ zum ersten Teilbehältnis 1 in Bewegung gesetzt. Dies geschieht entweder durch Rotation des Mischhakens 57 relativ zur Haube 45, durch Rotation der Haube 45 zusammen mit dem Mischhaken 57 bei feststehendem Teilbehältnis 1 oder durch Rotation des ersten Teilbehältnisses 1 bei feststehender Haube, wie in Fig. 12a dargestellt. Alternativ zum Mischhaken können Kegelschnecken oder Schaufeln als Mischwerkzeug eingesetzt werden. Es kann ein Rührwerk oder ein Planetwerk zum Einsatz kommen. Als Material der Mischwerkzeuge kommt Stahl, Thermoplast oder Duroplast in Betracht. Es können auch, wie in Fig. 11b gezeigt, mehrere Mischwerkzeuge zum Einsatz kommen. Die Form der Mischwerkzeuge kann gerichtsspezifisch variieren. Möglich ist auch, bei den Hauben der in Fig. 9 und 10 gezeigten Misch- und Erwärmvorrichtung 11"' verschiedene Mischwerkzeuge vorzusehen, um diese bei Bedarf bei unterschiedlichen Gerichten einsetzen zu können.

Als Alternative zu den Einströmöffnungen in der Wandung der Haube oder zusätzlich zu diesen können Einströmöffnungen auch im Mischwerkzeug selbst vorgesehen sein (hier nicht dargestellt). Dies hat den Vorteil, dass der Wasserdampf direkt in das Gericht geleitet wird.

Fig. 12a, b zeigt eine weitere Variante einer Misch- und Erwärmvorrichtung. Die Dampfhaube 45' dient hier lediglich zum Bedampfen des Garraums mit heissem Wasserdampf, hat jedoch keine Rührvorrichtung. Die beiden Komponenten 32 und 33 werden durchmischt, indem das erste Teilbehältnis 1 mittels eines rotierenden Mischers 58 in Rotation versetzt wird. Aufgrund er Zentrifugalwirkung steigt das Kochgut an den Rändern nach oben und rutscht über die sich bildende Böschung ab. Eine Mischwirkung stellt sich lediglich an der Oberfläche ein. Vorteile sind jedoch einfache Bauart, leichte Reinigung, milde Mischwirkung und geringer Abrieb. Alternativ kann die feststehende Haube 45' mit einem feststehenden Mischwerkzeug versehen werden, um die Wirkung der Rotation weiter zu verstärken.

In Fig. 12b wird der rotierende Mischer 58' zusätzlich schräg gestellt, wodurch das Vermischen der Komponenten 31, 32 verstärkt wird. In einer weiteren vorteilhaften Weiterbildung wird der rotierende Mischer mitsamt dem Mischbehältnis 36" zusätzlich zur Rotation in eine Schwenkbewegung versetzt.

Im Magazin 6 sind Teilbehältnisse mit Speisekomponenten einer Sorte, z.B. Spaghetti, Ravioli, Tortellini, Tomatensauce, Pestosauce, etc., jeweils in einem Stapel an definierter Stelle gelagert. Ebenso sind leere Teilgefässe im Magazin an definierter Stelle gelagert. Vorzugsweise sind wenigstens 32 verschiedene Komponenten vorhanden. Auf diese Weise kann per Fernsteuerung des Roboters ein Gericht in beliebiger Kombination von ersten und zweiten Komponenten zusammengestellt werden. Dem Kunden kann eine grosse Vielfalt von Gerichten geboten werden, ohne dass dafür der Lagerplatz wesentlich erhöht werden müsste.

## Patentansprüche

1. Verfahren zum Fertigstellen von vorgefertigten Speisen, die in einer, sich in einem ersten Teilbehältnis (1) befindenden, ersten Komponente und einer davon getrennten, sich in einem zweiten Teilbehältnis (2) befindenden, zweiten Komponente bereitgestellt werden, insbesondere von vorgekochter Pasta und vorgefertigter Sauce, wobei zum gleichmässigen Erwärmen wenigstens die erste Komponente vor oder nach Zufügen der zweiten Komponente in einem Mischbehältnis (36, 36', 36") heissem Wasserdampf, der dem Mischbehältnis (36, 36', 36") zugeführt wird, für ein vorbestimmbares Zeitintervall ausgesetzt und dabei gemischt wird,
**dadurch gekennzeichnet, dass** das Mischbehältnis (36, 36', 36") zum Erwärmen geschlossen ist und wenigstens die erste Komponente vor oder nach Zufügen der zweiten Komponente während dem Erwärmen im Mischbehältnis (36, 36', 36'') gerührt und/oder geschüttelt wird, und eines der Teilbehältnisse (1, 2) zum Zusammenfügen der beiden Komponenten auf das andere Teilbehältnis (1, 2) umgeschlagen wird, so dass die erste oder zweite Komponente in das zweite bzw. erste Teilgefäss (2 bzw. 1) entleert wird.

2. Verfahren nach Anspruch 1, **dadurch gekennzeichnet, dass** der Wasserdampf eine Temperatur von 100 bis 160°C, vorzugsweise 140°C, und einen Wassergehalt von 0,5 bis 3 ml Wasser pro Liter Dampf hat, vorzugsweise 1 ml Wasser pro Liter Dampf.

3. verfahren nach Anspruch 1 oder 2, **dadurch gekennzeichnet, dass** das Zeitintervall, in dem erwärmt und gerührt und/oder geschüttelt wird, 10 bis 40 Sekunden beträgt, vorzugsweise etwa 15 Sekunden.

4. Verfahren nach einem der vorangegangenen Ansprüche, **dadurch gekennzeichnet, dass** der Wasserdampf unter einem Druck von 0 bis 0,4 bar, vorzugsweise 0,2 bar zugeführt wird.

5. verfahren nach einem der vorangegangenen Ansprüche, - bei dem in einem ersten Schritt nur die erste Komponente durch Zufuhr von Dampf erwärmt und dabei gerührt und/oder geschüttelt wird, in einem zweiten Schritt die zweite Komponente zugefügt und beide Komponenten zum Mischen gemeinsam gerührt und/oder geschüttelt werden.

6. Verfahren nacht einem der vorangegangenen Ansprüche, wobei die Teilbehältnisse (1, 2) passgenau zu einem geschlossenen Mischbehältnis (36) zusammensetzbar sind, wobei das Mischbehältnis (36) zum Zuführen von heissem Dampf mit wenigstens einer Einlasskanüle (37) durchstochen und zum Durchmischen der beiden Komponenten in eine Schüttelbewegung versetzt wird, vorzugsweise entlang einer nicht ausschliesslich in horizontaler Richtung verlaufenden Bewegungsbahn (14, 14' 141' ') bewegt wird.

7. Verfahren nach einem der Ansprüche 9 bis 5, wobei auf das erste Teilbehältnis (1) vor oder nach dem Zufügen der zweiten Komponente eine Haube (45,45') aufgesetzt wird, die einem Zufuhrkanal (15") und nach innen offene Einlassöffnungen (56) für Wasserdampf enthält und mit dem ersten Teilbehältnis ein geschlossenes Mischbehältnis (36', 36'') bildet, und wobei das Mischbehältnis (36', 36") zum Durchmischen der beiden Komponenten bewegt wird, vorzugsweise in eine Schüttelbewegung versetzt wird, vorzugsweise entlang einer nicht ausschliesslich in horizontaler Richtung verlaufenden Bewegungsbahn bewegt wird.

8. verfahren nach einem des Ansprüche 1 bis 5, oder 7 wobei auf das erste Teilbehältnis (1) vor oder nach dem Zufügen der zweiten Komponente eine Haube (45) aufgesetzt wird, die mit dem ersten Teilbehältnis (1) ein geschlossenes Mischbehältnis (36') bildet und einen Zufuhrkanal (15'') und nach innen offene Einlassöffnungen (56) für Wasserdampf sowie eine in das erste Teilbehältnis (1) hineinragende Rührvorrichtung (46) zum Umrühren des Inhalts während der Wasserdampfzufuhr enthält.

9. Verfahren nach einem der vorangegangenen Ansprüche, bei dem das Mischbehältnis (36, 36', 36'') nach dem Erwärmen und Durchmischen geöffnet wird, ein Teller (17), dessen Durchmesser grösser ist als der Durchmesser des Mischgefässes (36, 36', 36"), auf das geöffnete Mischgefäss (36, 36', 36'') gelegt wird und das Mischgefäss (36, 36', 35") zusammen mit dem Teller (17) umgedreht und dann entfernt wird.

10. Vorrichtung zum Fertigstellen von vorgefertigen Speisen, die sich in einem Mischbehältnis (36, 36', 36'') befinden, mit einer Misch- und Erwärmstation (11, 11', 11", 11"'), die eine Zufuhreinrichtung (15, 15', 15") für Wasserdampf und eine Mischvorrichtung enthält, **dadurch gekennzeichnet, dass** die Speisen sich während dem Erwärmen in einem geschlossenen Mischbehältnis (36, 36', 36") befinden, die Zufuhreinrichtung (15, 15', 15") für Wasserdampf wenigstens teilweise und eine Rührvorrichtung (46) in das Innere (35, 35') des Mischbehältnisses (36, 36', 36'') einbringbar sind, und die Mischvorrichtung der Misch- und Erwärmstation (11, 11', 11", 11''') eine Rührvorrichtung (46) und/oder eine Schüttelvorrichtung (30, 30') aufweist, die das Mischbehältnis (36, 36', 36") in eine Schüttelbewegung zu versetzen imstande ist.

11. Vorrichtung nach Anspruch 10, **dadurch gekennzeichnet, dass** die Misch- und Erwärmstation (11"') eine Haube (45,45') aufweist, die auf ein erstes Teilbehältnis (1), in dem sich die vorgefertigte Speise befindet, unter Bildung des geschlossenen Mischgefässes (36', 36 ") aufgesetzt wird, wobei in der Haube 45, 45' eine Zufuhreinrichtung (15") für Wasserdampf mit wenigstens einem Zufuhrkanal, nach innen offenen Einlassöffnungen (56) und einem von aussen zugänglichen Anschluss integriert ist.

12. Vorrichtung nach Anspruch 10, **dadurch gekennzeichnet, dass** die Haube 45,45' eine in das Innere (35') des Mischbehältnisses (36', 36'') ragende Rührvorrichtung (46) aufweist.

13. Vorrichtung nach Anspruch 10, **dadurch gekennzeichnet, dass** die Zufuhreinrichtung (15, 15') für Wasserdampf wenigstens eine Kanüle (37) aufweist, die eine Wandung des Mischgefässes (36) zu durchstechen imstande ist.

14. Vorrichtung zum Fertigstellen von vorgefertigten Speisen, die in einer ersten und einer davon getrennten zweiten Komponente in einem ersten bzw. zweiten Teilbehältnis 1 bzw. 3 vorliegen, insbesondere von vorgekochter Pasta und vorgefertigter Sauce, nach einem der Ansprüche 10 bis 13, **gekennzeichnet durch** wenigstens einen Träger (3) mit zwei zusammenklappbaren mit Ausnehmungen (21, 21') zur passgenauen Aufnahme eines Teilbehältnisses (1, 2) versehenen Trägerteilen (4, 5), **durch** eine Beladestation (9, 9') zum Einsetzen von wenigstens einem ersten Teilbehältnis (1) in den Träger (3), einer UmschlagVorrichtung (10, 10') zum Aufeinanderklappen der Trägerteile (4, 5) und einer Transportvorrichtung (13, 13') zum Transportieren des Trägers (3) zur Misch- und Erwärmstation (11, 11', 11", 11"') und weiter zu einer Ausgabestation.

15. Verwendung einer Vorrichtung nach einem der Ansprüche. 10 bis 14 zur Durchführung des Verfahrens nach einem der Ansprüche 1 bis 9.

## Claims

1. Method for preparing pre-prepared meals which are supplied in a first component which is situated in a first subcontainer (1) and a second component which is separated therefrom and is situated in a second subcontainer (2), in particular pre-cooked pasta and pre-prepared sauce, uniform heating being ensured by exposing at least the first component, before or after the second component has been added, in a mixing container (36, 36', 36") to hot steam, which is supplied to the mixing container (36, 36', 36"), for a predeterminable period of time, and by mixing it at the same time, **characterized in that** the mixing container (36, 36', 36") is closed for heating and at least the first component is stirred and/or shaken during heating in the mixing container (36, 36', 36"), before or after the second component is added, and one of the subcontainers (1, 2) is overturned onto the other subcontainer (1, 2) for the purpose of joining the two components together, with the result that the first or second component is emptied into the second or first subvessel (2 or 1).

2. Method according to Claim 1, **characterized in that** the steam has a temperature of 100 to 160°C, preferably 140°C, and a water content of 0.5 to 3 ml of water per liter of steam, preferably 1 ml of water per liter of steam.

3. Method according to Claim 1 or 2, **characterized in that** the period of time in which heating and stirring and/or shaking is carried out is 10 to 40 seconds, preferably approximately 15 seconds.

4. Method according to one of the preceding claims,
**characterized in that** the steam is supplied at a pressure of 0 to 0.4 bar, preferably 0.2 bar.

5. Method according to one of the preceding claims, in which, in a first step, only the first component is heated by the supply of steam and is stirred and/or shaken at the same time, and, in a second step, the second component is added and both components are stirred and/or shaken together in order to mix them.

6. Method according to one of the preceding claims, it being possible for the subcontainers (1, 2) to be put together in a precisely fitting manner to form a closed mixing container (36), the mixing container (36) being pierced by at least one hollow inlet needle (37) for the purpose of supplying hot steam, and, for the purpose of mixing the two components, being set into a shaking movement, preferably being moved along a path of movement (14, 14', 14") not exclusively running in the horizontal direction.

7. Method according to one of claims 1 to 5, a cover (45, 45') being placed onto the first subcontainer (1) before or after the second component has been added, which cover contains a supply duct (15") and inwardly open inlet openings (56) for steam and, together with the first subcontainer, forms a closed mixing container (36', 36"), and the mixing container (36', 36") being moved for the purpose of mixing the two components, preferably being set into a shaking movement, preferably along a path of movement not exclusively running in the horizontal direction.

8. Method according to one of claims 1 to 5, or 7, a cover (45) being placed onto the said first subcontainer (1) before or after the second component has been added, the cover, together with the first subcontainer (1), forming a closed mixing container (36') and containing a supply duct (15") and inwardly open inlet openings (56) for steam, and a stirring device (46), which protrudes into the first subcontainer (1), for stirring the contents during the supply of steam.

9. Method according to one of the preceding claims, in which the mixing container (36, 36', 36") is opened after the heating and mixing, a plate (17), the diameter of which is larger than the diameter of the mixing vessel (36, 36', 36"), is placed onto the opened mixing vessel (36, 36', 36"), and the mixing vessel (36, 36', 36") is turned over together with the plate (17) and is then removed.

10. Device for preparing pre-prepared meals which are situated in a mixing container (36, 36', 36"), having a mixing and heating station (11, 11', 11", 11"'), which contains a supply device (15, 15', 15'') for steam and a mixing device, **characterized in that** the meals are situated in a closed mixing container (36, 36', 36") during heating, and at least part of the supply device (15, 15', 15") for steam and a stirring device (46) can be placed into the interior (35, 35') of the mixing container (36, 36', 36"), and the mixing device of the mixing and heating station (11, 11', 11", 11'") has a stirring device (46) and/or a shaking device (30, 30') which is capable of setting the mixing container (36, 36', 36") into a shaking movement.

11. Device according to Claim 10, **characterized in that** the mixing and heating station (11"') has a cover (45, 45') which is placed onto a first subcontainer (1), in which the pre-prepared meal is situated, forming the closed mixing vessel (36', 36"), with a supply device (15") for steam with at least one supply duct, inwardly open inlet openings (56) and a connection accessible from the outside being integrated in the cover (45, 45').

12. Device according to Claim 10, **characterized in that** the cover (45, 45') has a stirring device (46) protruding into the interior (35') of the mixing container (36', 36").

13. Device according to Claim 10, **characterized in that** the supply device (15, 15') for steam has at least one hollow needle (37) which is capable of piercing a wall of the mixing vessel (36).

14. Device for preparing pre-prepared meals which, in a first component and a second component separated therefrom, are present in a first and second subcontainer (1 and 2), in particular pre-cooked pasta and pre-prepared sauce, according to one of Claims 10 to 13, **characterized by** at least one carrier (3) having two carrier parts (4, 5) which can be folded together and are provided with recesses (21, 21') for holding a subcontainer (1, 2) in a precisely fitting manner, by a loading station (9, 9') for the insertion of at least one first subcontainer (1) into the carrier (3), an overturning device (10, 10') for folding the carrier parts (4, 5) onto each other, and a transporting device (13, 13') for transporting the carrier (3) to the mixing and heating station (11, 11', 11", 11"') and onto a discharge station.

15. Use of a device according to one of Claims 10 to 14 for carrying out the method according to one of claims 1 to 9.

## Revendications

1. Procédé pour la préparation de plats pré-cuisinés, qui sont disponibles sous la forme d'un premier ingrédient situé dans un premier récipient partiel (1) et d'un deuxième ingrédient séparés l'un de l'autre, situé dans un deuxième récipient partiel (2), particulièrement adapté pour des pâtes pré-cuites avec une sauce pré-cuisinée, au moins le premier ingrédient étant exposé à la vapeur d'eau chaude arrivant dans le récipient de mélange (36, 36', 36"), pendant un laps de temps prédéterminé, tout en étant mélangé, dans le but d'un réchauffement uniforme, cela avant ou après l'ajout du deuxième ingrédient dans un récipient de mélange (36, 36', 36"), **caractérisé en ce que** le récipient de mélange (36, 36', 36") est fermé pendant le chauffage et **en ce qu'**au moins le premier ingrédient est remué et/ou secoué pendant le réchauffement dans le récipient de mélange (36, 36', 36"), avant ou après l'ajout du deuxième ingrédient, et **en ce que** l'un des récipients partiels (1, 2) est retourné au-dessus de l'autre récipient partiel (1, 2) pour réunir les deux ingrédients, de façon à ce que le premier ou le deuxième ingrédient soit versé dans le deuxième ou le premier récipient partiel (2 ou 1).

2. Procédé selon la revendication 1, **caractérisé en ce que** la vapeur d'eau atteint une température de 100 à 160°C, préférentiellement 140°C, et **en ce qu'**elle contient entre 0,5 et 3 ml d'eau par litre de vapeur, préférentiellement 1 ml par litre de vapeur.

3. Procédé selon la revendication 1 ou 2,
**caractérisé en ce que** le laps de temps pendant lequel le produit est réchauffé, remué et/ou secoué s'étend sur 10 à 40 secondes, préférentiellement sur environ 15 secondes.

4. Procédé selon l'une des revendications précédentes, **caractérisé en ce que** la vapeur d'eau est amenée avec une pression de 0 à 0,4 bar, préférentiellement de 0,2 bar.

5. Procédé selon l'une des revendications précédentes, dans lequel seul le premier ingrédient est réchauffé par l'apport de vapeur au cours d'une première étape, tout en étant remué et/ou secoué, et le deuxième ingrédient est ensuite ajouté au cours d'une deuxième étape, les deux ingrédients sont remués et/ou secoués ensemble pour les mélanger.

6. Procédé selon l'une des revendications précédentes, dans lequel les récipients partiels (1, 2) peuvent être assemblés précisément en un seul récipient de mélange (36) fermé, le récipient de mélange (36) étant percé par au moins un tube d'arrivée (37) pour l'apport de la vapeur chaude et secoué pour le mélange des deux ingrédients, de préférence le long d'une voie de déplacement (14, 14', 14") pas uniquement horizontale.

7. Procédé selon l'une des revendications 1 à 5, dans lequel un couvercle (45, 45') est placé sur le premier récipient partiel (1) avant ou après l'ajout du deuxième ingrédient, ce couvercle possédant un tube d'apport (15") et des ouvertures d'admission (56) orientées vers l'intérieur pour la vapeur d'eau et formant un récipient de mélange (36', 36") fermé avec le premier récipient partiel, le récipient de mélange (36', 36") étant mis en mouvement pour mélanger les deux ingrédients, en étant de préférence secoué le long d'une voie de déplacement pas seulement horizontale.

8. Procédé selon l'une des revendications 1 à 5 ou bien 7, dans lequel un couvercle (45) est placé sur le premier récipient partiel (1), avant ou après l'ajout du deuxième ingrédient, formant un récipient de mélange (36') fermé avec le premier récipient partiel (1) et possédant un tube d'apport (15") et des ouvertures d'admission (56) orientées vers l'intérieur pour la vapeur d'eau ainsi qu'un dispositif de mélange (46) pénétrant dans le premier récipient partiel (1) pour mélanger le contenu pendant que la vapeur est ajoutée.

9. Procédé selon l'une des revendications précédentes, dans lequel le récipient de mélange (36, 36', 36") est ouvert après le réchauffement et le mélange, une assiette (17) dont le diamètre est supérieur à celui du récipient de mélange (36, 36', 36") étant placée sur le récipient de mélange (36, 36', 36") ouvert et le récipient de mélange (36, 36', 36") étant retourné ensemble avec l'assiette (17) puis retiré.

10. Dispositif pour la préparation de plats pré-cuisinés se trouvant dans un récipient de mélange (36, 36', 36"), avec une station de mélange et de réchauffement (11, 11', 11", 11"') comprenant un dispositif d'apport (15, 15', 15") pour la vapeur d'eau ainsi qu'un dispositif de mélange, **caractérisé en ce que** pendant le réchauffement les plats se trouvent dans un récipient de mélange (36, 36', 36") fermé, le dispositif d'apport (15, 15', 15") pour la vapeur d'eau pouvant être au moins partiellement introduit à l'intérieur (35, 35') du récipient de mélange (36, 36', 36"), tout comme un dispositif de mélange (46), et le dispositif de mélange de la station de mélange et de réchauffement (11, 11', 11", 11"') possédant un dispositif de mélange (46) et/ou un dispositif de secouement (30, 30') capable de secouer le récipient de mélange (36, 36', 36").

11. Dispositif selon la revendication 10, **caractérisé en ce que** la station de mélange et de réchauffement (11"') comporte un couvercle (45, 45') placé sur le premier récipient partiel (1) dans lequel se trouve le plat pré-cuisiné, formant ainsi un récipient de mélange (36', 36") fermé, un dispositif d'apport (15") pour la vapeur d'eau étant intégré au couvercle (45, 45') avec au moins un tube d'apport, ainsi que des ouvertures d'admission (56) orientées vers l'intérieur et un raccordement accessible par l'extérieur.

12. Dispositif selon la revendication 10,
**caractérisé en ce que** le couvercle (45, 45') comporte un dispositif de mélange (46) qui s'introduit à l'intérieur (35') du récipient de mélange (36', 36").

13. Procédé selon la revendication 10,
**caractérisé en ce que** le dispositif d'apport (15, 15') pour la vapeur d'eau possède au moins un tube (37) capable de percer une paroi du récipient de mélange (36).

14. Dispositif pour la préparation de plats pré-cuisinés disponibles sous la forme d'un premier et d'un deuxième ingrédient séparés l'un de l'autre dans un premier ou dans un deuxième récipient partiel (1 ou 2), notamment pour la préparation de pâtes pré-cuites avec une sauce pré-cuisinée, selon l'une des revendications 10 à 13, **caractérisé par** au moins un support (3) composé de deux parties de support (4, 5) qui peuvent être repliées l'une vers l'autre et qui possèdent des évidements (21, 21') permettant d'accueillir parfaitement un récipient partiel (1, 2), ainsi que par une station de chargement (9, 9') permettant de placer au moins un premier récipient partiel (1) dans le support (3), un dispositif de renversement (10, 10') permettant d'emboîter les deux parties de support (4, 5) et un dispositif de transport (13, 13') permettant de transporter le support (3) vers la station de mélange et de réchauffement (11, 11', 11'', 11"') puis vers une station de distribution.

15. Utilisation d'un dispositif selon l'une des revendications 10 à 14, pour la mise en oeuvre du procédé selon l'une des revendications 1 à 9.
